(19) Europäisches Patentamt / European Patent Office / Office européen des brevets

(11) **EP 3 418 766 B1**

(12) **EUROPÄISCHE PATENTSCHRIFT**

(45) Veröffentlichungstag und Bekanntmachung des Hinweises auf die Patenterteilung:
**20.11.2019 Patentblatt 2019/47**

(51) Int Cl.:
*G01S 7/486* (2006.01)  *G01S 7/487* (2006.01)
*G01S 17/10* (2006.01)  *G01S 17/89* (2006.01)
*G01S 7/497* (2006.01)

(21) Anmeldenummer: **18176901.9**

(22) Anmeldetag: **11.06.2018**

(54) **OPTOELEKTRONISCHER SENSOR UND VERFAHREN ZUR MESSUNG DER ENTFERNUNG ZU EINEM OBJEKT**

OPTOELECTRONIC SENSOR AND METHOD FOR MEASURING THE DISTANCE TO AN OBJECT

CAPTEUR OPTOÉLECTRONIQUE ET PROCÉDÉ DE MESURE DE LA DISTANCE PAR RAPPORT À UN OBJET

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.06.2017 DE 102017113674**

(43) Veröffentlichungstag der Anmeldung:
**26.12.2018 Patentblatt 2018/52**

(73) Patentinhaber: **Sick AG**
**79183 Waldkirch (DE)**

(72) Erfinder:
• **Köhl, Martin**
**79183 Waldkirch (DE)**
• **Kienzler, Stefan**
**79183 Waldkirch (DE)**
• **Waslowski, Kai**
**79183 Waldkirch (DE)**
• **Zwölfer, Ulrich**
**79183 Waldkirch (DE)**
• **Thil, Christophe**
**79183 Waldkirch (DE)**

(56) Entgegenhaltungen:
**DE-A1-102007 013 714   US-A1- 2016 033 644**

• **MILSTEIN A B ET AL: "Acquisition algorithm for direct-detection ladars with Geiger-mode avalanche photodiodes", APPLIED OPTICS, OPTICAL SOCIETY OF AMERICA, WASHINGTON, DC; US, Bd. 47, Nr. 2, 10. Januar 2008 (2008-01-10), Seiten 286-311, XP001511081, ISSN: 0003-6935, DOI: 10.1364/AO.47.000296**
• **JANE X. LUU ET AL: "Saturation effects in heterodyne detection with Geiger-mode InGaAs avalanche photodiode detector arrays", APPLIED OPTICS, Bd. 45, Nr. 16, 1. Juni 2006 (2006-06-01), Seiten 3798-3804, XP055505002,**
• **BEER MAIK ET AL: "Dead time effects in the indirect time-of-flight measurement with SPADs", 2017 IEEE INTERNATIONAL SYMPOSIUM ON CIRCUITS AND SYSTEMS (ISCAS), IEEE, 28. Mai 2017 (2017-05-28), Seiten 1-4, XP033155984, DOI: 10.1109/ISCAS.2017.8050357 [gefunden am 2017-09-25]**

**Beschreibung**

Die Erfindung betrifft einen optoelektronischen Sensor und ein Verfahren zur Messung der Entfernung zu einem Objekt in einem Überwachungsbereich nach dem Oberbegriff von Anspruch 1 beziehungsweise 14.

In einem entfernungsmessenden optoelektronischen Sensor wird über die reine Objekterfassung hinaus eine Distanz zu dem Objekt bestimmt. Mit Hilfe der Distanzinformation werden auch dreidimensionale Bilder oder sogenannte Tiefenkarten erfasst, wenn der Sensor ortsauflösend ist. Ein Scanner tastet dazu mit einem Lichtstrahl den Überwachungsbereich ab, während eine 3D-Kamera für jedes ihrer Pixel statt oder neben der Helligkeitsinformation auch eine Distanzinformation bestimmt. Dabei können die Pixel auch jeweils mehrere lichtempfindliche Elemente aufweisen, die gemeinsam zu einem Entfernungswert beitragen.

Ein herkömmliches Verfahren zur Distanzmessung ist die Lichtlaufzeitmessung. Dabei wird ein kurzer Lichtpuls ausgesandt und die Zeit bis zum Empfang einer Remission oder Reflexion des Lichtpulses gemessen. Um eine höhere Robustheit gegenüber Störereignissen und Rauscheffekten zu gewinnen, ist beispielsweise aus DE 10 2007 013 714 A1 bekannt, nacheinander eine Vielzahl von Einzellichtpulsen auszusenden, die daraufhin erzeugten Empfangssignale in einem Histogramm zu sammeln und anschließend gemeinsam auszuwerten, etwa über eine Suche nach einem Maximum in dem Histogramm, aus dem der Empfangszeitpunkt abgeleitet wird.

Derartige Histogrammauswertungen benötigen viel Speicher, denn die gesamte im Messbereich zu erwartende Lichtlaufzeit wird in Bins unterteilt, deren Breite zumindest in der Nähe der angestrebten Messauflösung liegt. Soll die Entfernungsmessung ortsauflösend sein, wie in einer 3D-Kamera, so skaliert dieser Speicherbedarf noch mit der Anzahl Pixel, oder die Erfassungszeit steigt zur Vermeidung des erhöhten Speicherbedarfs durch sequentielle Verarbeitung der Pixel ganz erheblich an. Besonders hinderlich ist das für die Entwicklung kostengünstiger integrierter Auswertungsbausteine etwa in Form eines ASICs (Application Specific Integrated Circuit). Die zahlreichen Speicherzellen sind bei dem erläuterten Zählvorgang über Histogramme flächenbestimmend und zudem geschwindigkeitslimitierend.

Die Nachweisempfindlichkeit einfacher Photodioden genügt in vielen Anwendungsfällen nicht. In einer Lawinenphotodiode (APD, Avalanche Photo Diode) löst das einfallende Licht einen kontrollierten Lawinendurchbruch (Avalanche Effect) aus. So werden die von einfallenden Photonen erzeugten Ladungsträger vervielfacht, und es entsteht ein Photostrom, der zu der Lichtempfangsintensität proportional, dabei aber wesentlich größer ist als bei einer einfachen PIN-Diode. Im sogenannten Geiger-Modus ist die Lawinenphotodiode oberhalb der Durchbruchspannung vorgespannt, so dass bereits ein einziger, durch ein einzelnes Photon freigesetzter Ladungsträger eine Lawine auslösen kann, die dann aufgrund der hohen Feldstärke sämtliche verfügbaren Ladungsträger rekrutiert. Die Lawinenphotodiode zählt somit wie der namensgebende Geigerzähler Einzelereignisse. Lawinenphotodioden im Geiger-Modus werden auch als SPAD (Single-Photon Avalanche Diode) bezeichnet.

Die hohe Empfindlichkeit der SPADs bringt auch Nachteile mit sich, da im Grenzfall schon ein einziges störendes Photon oder internes Rauschereignis das gleiche Signal liefert wie ein ausgeprägtes Nutzsignal. Außerdem ist das SPAD im Anschluss für eine gewisse Totzeit nicht ansprechbar, wobei diese Totzeit auf den kurzen Zeitskalen einer Lichtlaufzeitmessung faktisch bedeutet, dass ein SPAD dann erst wieder bei einer Messwiederholung verfügbar ist. Die herkömmlichen Verfahren zur Lichtlaufzeitmessung berücksichtigen diese Besonderheiten von SPADs nicht. Sie lassen sich daher zwar auf SPAD-Lichtempfänger übertragen, aber dabei bleibt Verbesserungspotential durch SPADs ungenutzt.

Aus der Arbeit von Milstein et al. "Acquisition algorithm for direct-detection ladars with Geiger-mode avalanche photodiodes", Applied optics 47(2), 2008, S. 296-311 ist ein Verfahren bekannt, um mit einem SPAD-Detektor Entfernungen zu einem Ziel zu messen. Dabei werden Histogramme von Laufzeiten gebildet und die Wahrscheinlichkeiten für ein erfasstes Ziel beziehungsweise eine Fehldetektion im jeweiligen Bin systematisch unter Berücksichtigung des Totzeitverhaltens von SPADs untersucht.

In Luu, Jane X., and Leaf A. Jiang. "Saturation effects in heterodyne detection with Geiger-mode InGaAs avalanche photodiode detector arrays." Applied optics 45.16 (2006): 3798-3804 werden analytische Ausdrücke für die Dopplerauflösung und das Signal-Rausch-Verhalten in einem SPAD-Detektor hergeleitet. Dabei wird auch modelliert, wie viele SPADs zu einem jeweiligen Zeitpunkt noch zur Verfügung stehen.

Diese Aufgabe wird durch einen optoelektronischen Sensor und ein Verfahren zur Messung der Entfernung zu einem Objekt in einem Überwachungsbereich nach Anspruch 1 beziehungsweise 14 gelöst. Mit einem Lichtsender werden Lichtsignale ausgesandt, nach Reflexion oder Remission an einem Objekt in einem Lichtempfänger wieder empfangen, und die Einzellichtlaufzeit wird bestimmt. Der Lichtempfänger weist mindestens eine im Geiger-Modus betriebene Lawinenphotodiode oder SPAD auf. Um einen verlässlichen Entfernungsmesswert zu erhalten, wird eine Vielzahl von Einzellichtlaufzeiten von dem Sensor zu dem Objekt gemessen und daraus ein gemeinsamer Messwert bestimmt. Genaugenommen wird eine Einzellichtlaufzeit für Hin- und Rückweg bestimmt. Die Statistik wird über Zeit und/oder Ort gewonnen, nämlich durch Messwiederholungen mit mehreren aufeinanderfolgenden Einzellichtpulsen beziehungsweise indem der Lichtempfänger mehrere Lawinenphotodioden im Geigermodus aufweist.

Die Erfindung geht von dem Grundgedanken aus, das besondere statistische Verhalten von SPADs bei Mess- und Hintergrundereignissen zu modellieren. Dabei sind Messereignisse von Photonen des Lichtsignals verursacht, wohingegen Hintergrundereignisse alle übrigen Auslöser einer Lawine sind, wie Dunkelrauschen oder Fremdlichtempfang. Das gesuchte Auswertungsergebnis ist der genaue Empfangszeitpunkt $t_s$, aus dem dann mit Hilfe eines Referenzzeitpunkts, insbesondere des Sendezeitpunkts, die Lichtlaufzeit und über die Lichtgeschwindigkeit unter Berücksichtigung von Hin- und Rückweg die Distanz folgt. Damit ist der tatsächliche, der Distanz des Objekts entsprechende Empfangszeitpunkt $t_s$ und nicht derjenige eines einzelnen Lichtsignals auf einer einzelnen Lawinenphotodiode gemeint, welcher nur eine mit Messfehlern behaftete oder womöglich einem Hintergrundereignis entsprechende Einzelmessung darstellt.

Dieser Empfangszeitpunkt $t_s$ wird erfindungsgemäß in einem vorgebbaren Zeitintervall $[t_0,t_1]$ gesucht, welches beispielsweise einer Messperiode zwischen zwei ausgesandten Lichtsignalen oder von einem Sendezeitpunkt bis zu einem einer maximalen Reichweite entsprechenden Zeitpunkt oder ein Teilintervall der Messperiode ist. Das Modell, aus dem die Bestimmung des Empfangszeitpunkts $t_s$ abgeleitet wird, basiert auf der Anzahl $N(t)$ der zu einem jeweiligen Zeitpunkt $t$ noch verfügbaren Lawinenphotodioden. Das sind jene Lawinenphotodioden, die sich nicht bereits aufgrund eines Mess- oder Hintergrundereignisses in ihrer Totzeit befinden. Damit berücksichtigt das Modell die besondere Natur von Lawinenphotodioden im Geiger-Modus oder SPADs. Zu beachten ist, dass die Anzahl $N(t)$ auch Messwiederholungen beinhalten kann. Für die Statistik, welche dem gemeinsamen Messwert zugrunde liegt, ist unerheblich, ob eine Einzellichtlaufzeit aus derselben Messung mit unterschiedlichen Lawinenphotodioden oder einer Messwiederholung stammt. Daher muss insbesondere die maximale anfängliche Anzahl verfügbarer Lawinenphotodioden keineswegs direkt durch die Anzahl physisch vorhandener Lawinenphotodioden bestimmt sein. Anders ausgedrückt wird der Gesamtpool an verfügbaren Lawinenphotodioden durch n Messungen $n$-mal so groß. Auch in nur einer Messung müssen nicht zwingend alle vorhandenen Lawinenphotodioden verfügbar sein, weil sie möglicherweise durch Parametrierung, Defekt oder dergleichen nicht in die Messung einbezogen sind.

Die Erfindung hat den Vorteil, dass eine Lichtlaufzeit und damit die Distanz zu einem Objekt besonders genau und mit besonders wenig Aufwand bestimmt werden kann. Das Modell berücksichtigt nicht nur die besondere Natur von Lawinenphotodioden im Geiger-Modus oder SPADs, sondern nutzt deren Eigenschaften sogar konstruktiv aus, um einen genauen Empfangszeitpunkt $t_s$ zu bestimmen. Da insbesondere der Hintergrund einbezogen werden kann, ist die Auswertung auch sehr robust gegenüber Störungen wie starkes Fremdlicht oder hohes Dunkelrauschen und damit für anspruchsvolle industrielle Anwendungen besonders geeignet.

Die Auswertungseinheit ist dafür ausgebildet, den Empfangszeitpunkt $t_s$ mit Hilfe eines Hintergrundparameters $\lambda$ zu bestimmen. Damit ist der Hintergrund für das Modell erfasst und wird darin berücksichtigt. Man kann davon ausgehen, dass zu jedem Zeitpunkt ein konstanter Anteil der Lawinenphotodioden von einem Hintergrundereignis ausgelöst wird. Dementsprechend ergibt sich allein aufgrund von Hintergrund ein exponentieller Abfall von $N(t)$. Der Hintergrundparameter $\lambda$ ist dann die Zeitkonstante einer Exponentialfunktion. Es kann sich auch jedoch um eine Größe handeln, die den Hintergrund äquivalent oder approximativ beschreibt.

Die Auswertungseinheit ist bevorzugt dafür ausgebildet, den Hintergrundparameter $\lambda$ aus einer Messung von Einzellichtlaufzeiten zu bestimmen. Eine Möglichkeit dafür ist eine Messung bei inaktivem Lichtsender, d.h. ohne Aussenden von Lichtsignalen, so dass der Lichtempfänger ausschließlich Hintergrund registriert. Alternativ kann auch ein Teilbereich einer Messperiode mit ausgesandtem Lichtsignal verwendet werden, in dem keine Messereignisse vorkommen, wie am Anfang insbesondere durch künstliche Verzögerung des Sendezeitpunkts. Mit Methoden der Ordnungsstatistik ist auch möglich, den Hintergrundparameter $\lambda$ aus Einzellichtlaufzeiten mit Messereignis zu bestimmen. Schließlich kann der Hintergrundparameter $\lambda$ einfach vorgegeben werden, sei es als fester Parameter oder als Ergebnis einer Messung aus anderer Quelle.

Die Auswertungseinheit ist bevorzugt dafür ausgebildet, den Empfangszeitpunkt mit Hilfe eines Signalstärkeparameters $p$ zu bestimmen. Das ist ein dimensionsloser Parameter, welcher von der Intensität des remittierten Lichtsignals abhängt. Je stärker der Lichteinfall, umso mehr Messereignisse werden ausgelöst, was dann in Summe ein starkes Messsignal ergibt. Dementsprechend sinkt nach einem starken Messsignal die Anzahl $N(t)$ auch stärker, was das Modell durch den Signalstärkeparameter $p$ einbezieht.

In dem Modell werden vorzugsweise zum Empfangszeitpunkt $t_s$ eine Vielzahl von Lawinen gemäß einem Dirac-Puls $\delta(t - t_s)$ ausgelöst. Das Empfangssignal wird also als infinitesimal kurzer Puls modelliert. Das entspricht nicht vollständig der Realität, aber zumindest sehr kurze Sendepulse sind üblich und möglich. Ein Dirac-Puls von auslösenden Lawinenphotodioden führt zu einer sprunghaften Abnahme der Anzahl $N(t)$ verfügbarer Lawinenphotodioden gemäß der Heaviside-Funktion $\Theta$, gewichtet mit dem Signalstärkeparameter p. Andere Funktionen wie ein Gauß-förmiger Puls sind denkbar, bedürfen aber zumindest eines zusätzlichen Parameters zur Beschreibung der Pulsform, und deshalb ist dann die Auswertung nicht in der gleichen Einfachheit durchführbar.

In dem Modell ist vorzugsweise die Anzahl $N(t)$ der zu einem jeweiligen Zeitpunkt noch verfügbaren Lawinenphotodioden nach der Gleichung $N(t) = N(t_0)e^{-\lambda(t-t_0)-p\Theta(t-t_s)}$ mit Hintergrundparameter $\lambda$ und Signalstärkeparameter $p$

beschrieben. Das ist die Lösung einer Differentialgleichung, welche die momentane Veränderung $\frac{dN}{dt}$ der Anzahl noch verfügbarer Lawinenphotodioden $N(t)$ in Abhängigkeit von dem Hintergrundparameter $\lambda$, dem Signalstärkeparameter $p$ und dem Empfangszeitpunkt $t_s$ beschreibt.

Die Auswertungseinheit ist bevorzugt dafür ausgebildet, den Signalstärkeparameter $p$ aus der Anzahl der noch verfügbaren Lawinenphotodioden an der unteren Zeitgrenze $t_0$ und der oberen Zeitgrenze $t_1$ zu bestimmen. Lawinenphotodioden, die am Anfang des Zeitintervalls noch verfügbar waren und es am Ende nicht mehr sind, haben entweder ein Mess- oder ein Hintergrundereignis registriert. Der Hintergrund lässt sich durch den Hintergrundparameter $\lambda$ erfassen. Die verbleibende Differenz ist also die Folge von Messereignissen und daher geeignet, den Signalstärkeparameter $p$ zu bestimmen.

Die Auswertungseinheit ist bevorzugt dafür ausgebildet, den Signalstärkeparameter $p$ nach der Gleichung $e^{-p} = \frac{N(t_1)}{\alpha N(t_0)}$ zu bestimmen, wobei $\alpha = e^{-\lambda(t_1 - t_0)}$ mit Hintergrundparameter $\lambda$. Damit wird der Signalstärkeparameter $p$ einfach und schnell durch einen geschlossenen Ausdruck ermittelt.

Die Auswertungseinheit ist bevorzugt dafür ausgebildet, nacheinander erst einen Hintergrundparameter $\lambda$, dann mit Hilfe des Hintergrundparameters $\lambda$ einen Signalstärkeparameter $p$ und dann mit Hilfe von Hintergrundparameter $\lambda$ und Signalstärkeparameter $p$ den Empfangszeitpunkt $t_s$ zu bestimmen. Mit dem erfindungsgemäßen Modell ist eine solche sequentielle Bestimmung sämtlicher erforderlicher Parameter für die Bestimmung des Empfangszeitpunkts $t_s$ vorzugsweise ohne Näherungen oder iteratives Vorgehen möglich. Durch diese sequentielle Bestimmung und die Abwesenheit iterativer Prozeduren ist das erfindungsgemäße Vorgehen deutlich robuster und gleichzeitig weniger aufwändig als eine simultane Schätzung oder Berechnung von mehreren Parametern.

Die Auswertungseinheit ist bevorzugt dafür ausgebildet, den Empfangszeitpunkt mit Hilfe einer analytischen Formel aus der Anzahl noch verfügbarer Lawinenphotodioden $N(t)$ zu einem Zeitpunkt $t$, insbesondere zum Zeitpunkt $t$ = $t_0$ der unteren Zeitgrenze $t_0$ noch verfügbaren Lawinenphotodioden, einem Hintergrundparameter $\lambda$, einem Signalstärkeparameter $p$ und einem weiteren Parameter zu berechnen. Es kann ein geschlossener Ausdruck für den Empfangszeitpunkt $t_s$ angegeben werden, der sehr einfach auswertbar ist. Die Auswertungseinheit rechnet vorzugsweise numerisch, nicht analytisch, wobei aber die Vorschrift für die numerische Berechnung eine analytische Formel ist. Ein alternatives Vorgehen wie eine iterative Auswertung ist denkbar, aber nicht erforderlich.

Der Zeitpunkt $t$ samt zugehöriger Anzahl $N(t)$ noch verfügbarer Lawinenphotodioden, die in die Berechnung eingeht, kann in Kenntnis des Hintergrundparameters $\lambda$ in dem Zeitbereich vor dem Empfangszeitpunkt $t_s$ rechnerisch verschoben werden und ist daher insoweit frei wählbar. Insbesondere kann so die von vorneherein bekannte Gesamtzahl $N(0)$ insgesamt verfügbarer Lawinenphotodioden an einen Zeitpunkt $t$ rechnerisch angepasst werden. Alternativ kann diese Anzahl $N(t)$ der noch verfügbarer Lawinenphotodioden durch Zählen der Gesamtzahl der Ereignisse vor dem Zeitpunkt $t$ und Subtraktion des Ergebnisses von $N(0)$ auch ohne Kenntnis des Hintergrundparameters bestimmt werden.

Neben den bevorzugt gewählten Größen $t_0$, $t_1$, $N(t_0)$, $N(t_1)$ und $\lambda$ ist noch ein weiterer Parameter erforderlich, um den gemeinsamen Messwert $t_S$ zu bestimmen, weil das Modell sonst unterbestimmt wäre. Insbesondere ist aber keine Kenntnis von $N(t)$ im Inneren von $[t_0, t_1]$ notwendig, wenn man einen geeigneten weiteren Parameter wählt.

Der weitere Parameter ist bevorzugt ein Mittelwert $\mu$ der Einzellichtlaufzeiten in dem vorgebbaren Zeitintervall $[t_0, t_1]$. Diesen Mittelwert $\mu$ kann die Auswertungseinheit sehr einfach bestimmen, und zwar auch "on the fly", ohne sich Einzellichtlaufzeiten zu merken. Dadurch können im Gegensatz zu einer herkömmlichen Histogrammauswertung erhebliche Speicher- beziehungsweise Bandbreitenressourcen zum Bereitstellen der Histogrammdaten eingespart werden.

Die Auswertungseinheit ist bevorzugt dafür ausgebildet, den Empfangszeitpunkt $t_s$ zu

$$t_s = \left(-\frac{1}{\lambda}\right)\left[ln\left(\frac{e^{\lambda t_1 + p}(\mu\lambda + N_0) - N_0(1 + \lambda t_1)}{N_0(e^p - 1)}\right) - \lambda t_1\right] \text{ mit } N_0 = N(t_0)$$

zu berechnen. Durch diese Gleichung lässt sich der Empfangszeitpunkt mit wenigen Parametern sehr schnell berechnen. Dabei ist die Messauflösung nicht durch die Auswertung beschränkt, beispielsweise wie herkömmlich auf eine Binbreite eines Histogramms. Rechenerleichterungen für nichtlineare Funktionen durch Lookup-Tables oder Näherungen sind denkbar.

Die Auswertungseinheit ist bevorzugt dafür ausgebildet, vorab ein vorgebbares Zeitintervall aufzufinden oder zu verfeinern, das kürzer ist als eine Messperiode. Je genauer das Zeitintervall den Empfangszeitpunkt $t_s$ von Anfang an eingrenzt, desto genauer wird der gemeinsame Messwert. In einer naiven, idealen Betrachtung kommt es auf das Zeitintervall nicht an. In einer realen Messung führen aber die Rauscheinflüsse dazu, dass ein zu großes Zeitintervall noch nicht unbedingt die gewünschte Genauigkeit liefert. Das Zeitintervall kann durch eine Vorauswertung aufgefunden werden, beispielsweise durch eine Schwellenbewertung, welche ein Maximum von Messereignissen grob zeitlich lokalisiert. Genauer wird diese Vorauswertung, wenn keine starre Schwelle verwendet, sondern abgeschätzt wird, wie viele Einzellichtlaufzeiten aufgrund von Hintergrundereignissen in einem Zeitintervall zu erwarten sind, wobei eine exponentiell abfallende Häufigkeit von Hintergrundereignissen angenommen ist, und dann ein Zeitintervall bestimmt wird, in dem signifikant mehr Einzellichtlaufzeiten liegen als erwartet.

Der Lichtempfänger weist bevorzugt eine Vielzahl in einem Geiger-Modus betriebener Lawinenphotodioden und mehrere den Lawinenphotodioden einzeln oder gruppenweise zugeordnete Einzellichtlaufzeitmesseinheiten auf, die insbesondere mindestens einen TDC aufweisen. Wie schon erläutert, ist die Erfindung auch im Falle nur einer Lawinenphotodiode und folglich nur einer Einzellichtlaufzeitmesseinheit anwendbar, da die Anzahl $N(t)$ verfügbarer Lawinenphotodioden auch dann durch Messwiederholung keineswegs auf eins beschränkt ist. Prinzipiell sind für die Statistik, zumindest in einem Gesamtzeitraum der Messung, in dem die Szenerie einigermaßen statisch bleibt, Anzahl der physisch vorhandenen Lawinenphotodioden und Messdauer beziehungsweise Anzahl Messwiederholungen gegeneinander austauschbar.

Die Lawinenphotodioden sind dabei vorzugsweise linien- oder matrixartig angeordnet. Es gibt dann verschiedene Varianten der Verschaltung. Die Lawinenphotodioden können insgesamt einen gemeinsamen Messwert liefern. Es ist aber auch möglich, eine Ortsauflösung zu erhalten, indem mehrere Lawinenphotodioden als Gruppe je einen gemeinsamen Messwert bestimmen. Das ergibt dann einen 3D-Bildsensor, dessen effektive örtliche Auflösung der Anzahl von Gruppen entspricht, wobei die Gruppengröße eine Austauschbeziehung von örtlicher Auflösung, Genauigkeit und Messdauer der Entfernungsbestimmung ermöglicht. Dabei werden Einzellichtlaufzeiten wahlweise für jede Lawinenphotodiode oder nur gemeinsam für mehrere Lawinenphotodioden gemessen. Die Einzellichtlaufzeitmesseinheiten können fest oder variabel bestimmten Lawinenphotodioden zugeordnet sein.

Die Einzellichtlaufzeitmesseinheiten weisen bevorzugt einen TDC (Time-to-Digital-Converter) auf. Das ist ein bekanntes und relativ einfaches Bauteil, das mit hoher zeitlicher Auflösung Einzellichtlaufzeiten bestimmen kann. Der TDC wird vorzugsweise zum Sendezeitpunkt gestartet und zum Empfangszeitpunkt durch den empfangenen Einzellichtpuls gestoppt. Andere Betriebsarten sind denkbar, etwa die TDCs jeweils mit dem Auslösen einer Lawine zu starten und dann zu einem bekannten Zeitpunkt anzuhalten, etwa dem Ende der Messperiode.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:

Fig. 1   ein Blockdiagramm eines Messkerns zum Bestimmen der Lichtlaufzeit aus einer Folge von Einzellichtpulsen;
Fig. 2   ein beispielhaftes Histogramm einer Vielzahl mit Einzellichtpulsen gemessener Lichtlaufzeiten;
Fig. 3   einen beispielhaften Verlauf der Anzahl von Mess- und Hintergrundereignissen in Abhängigkeit von der Zeit; und
Fig. 4   einen der Figur 3 entsprechenden Verlauf der Anzahl noch verfügbarer Lawinenphotodioden in Abhängigkeit von der Zeit.

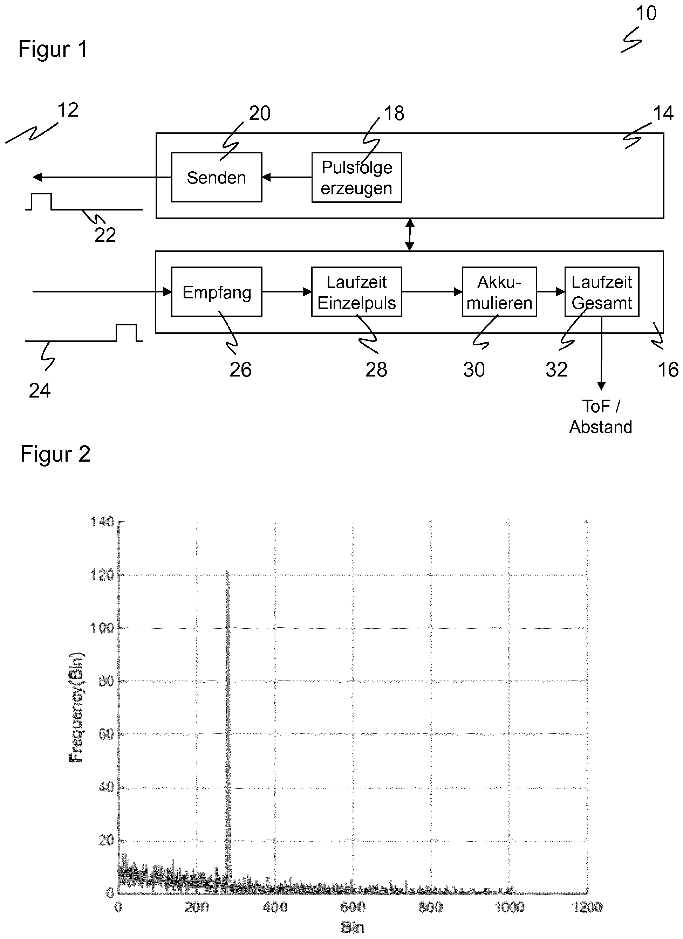

Figur 1 zeigt eine vereinfachte Blockdarstellung eines Sensors 10 zur Bestimmung des Abstands zu einem Objekt in einem Überwachungsbereich 12 durch Messung von Lichtlaufzeiten. Der Sensor 10 ist in Figur 1 in einen oberen Sendepfad 14 und einen unteren Empfangspfad 16 geteilt. Diese Teilung soll keine technischen Eigenschaften implizieren. Die Erfindung bezieht sich in erster Linie auf den Empfangspfad 16, so dass für den Sendepfad 14 jede bekannte Implementierung denkbar ist. Die Elemente des Sendepfades 14 können eigene Bausteine sein, aber auch mit den Elementen des Empfangspfades 16 auf einem gemeinsamen Baustein integriert werden.

In dem Sendepfad 14 werden Lichtsignale erzeugt, vorzugsweise mit einem Pulsgenerator 18 kurze Einzelpulse. Der Begriff Einzelpuls bezieht sich auf eine Einzel- im Gegensatz zu einer Gesamtmessung, nicht auf die Pulsform. Die Pulsformen, -pausen und -längen können vielmehr variiert werden, beispielsweise für eine Codierung oder Anpassung an Umgebungsverhältnisse. Für die Belange der Erfindung genügt jedoch die einfachere Vorstellung einer gleichmäßigen Sequenz von Einzelpulsen, die untereinander genügend zeitlichen Abstand haben, damit sich die Messungen untereinander nicht beeinflussen. Ein Lichtsender 20, beispielsweise eine LED oder Laserdiode, erzeugt aus dem elektronischen Sendesignal entsprechende Einzellichtpulse 22, die in den Überwachungsbereich 12 ausgesandt werden. Treffen die Einzellichtpulse 22 dort auf ein Objekt, so kehrt ein entsprechender reflektierter oder remittierter Einzellichtpuls 24 zu dem Sensor 10 zurück und trifft auf einen Lichtempfänger 26, der daraus ein elektronisches Empfangssignal erzeugt.

Der Lichtempfänger 26 weist nicht dargestellte Lawinenphotodioden auf, insbesondere eine große Anzahl Lawinenphotodioden in Linien- oder Matrixanordnung. Dabei kann eine Ortsauflösung erhalten bleiben und so ein 3D-Bildsensor entstehen, wobei durch gemeinsame Auswertung mehrerer Lawinenphotodioden eine reduzierte Ortsauflösung bei genauerer Entfernungsmessung erreichbar ist. Im Extremfall werden alle Lawinenphotodiodenelemente für die Bestimmung eines gemeinsamen Messwerts herangezogen. Die Lawinenphotodioden werden wie einleitend schon kurz beschrieben in einem Geiger-Modus betrieben und auch als SPADs bezeichnet. Die Lawinenphotodioden oder APDs (Avalanche Photo Diode) sind oberhalb ihrer Durchbruchsspannung vorgespannt, und der Lawinenstrom kann schon durch ein einziges Photon ausgelöst werden. SPADs sind daher extrem sensitiv, zugleich aber auch anfällig für Fehlmessungen, denn eine durch eine SPAD bestimmte Lichtlaufzeit kann fehlerhaft auf Dunkelrauschen oder die Registrierung eines Fremdlichtphotons zurückgehen und dann gänzlich unkorreliert mit dem Abstand des Objekts sein. Außerdem steht eine Lawinenphotodioden nach einer Lawine für eine Totzeit nicht mehr zur Verfügung. Der erfindungsgemäße Modellansatz zur Bestimmung der Lichtlaufzeit ist auf diese Eigenschaften der SPADs angepasst.

Als ersten Auswertungsschritt bestimmt eine Einzellichtlaufzeitmesseinheit 28 die jeweilige Einzellichtlaufzeit zwischen Aussenden eines Einzellichtpulses 22 und Empfangen des zugehörigen remittierten Einzellichtpulses 24. Es können mehrere Einzellichtlaufzeitmesseinheiten 28 vorgesehen sein, die fest oder dynamisch bestimmten Lawinenphotodioden oder Gruppen davon zugeordnet sind. Beispielsweise ist dafür ein Block von TDCs (Time-to-Digital-Converter) vorgesehen, wobei der jeweilige TDC mit Aussenden eines Einzellichtpulses gestartet wird und durch ein von der Lawine in einer zugeordneten Lawinenphotodiode erzeugtes Signal gestoppt wird. Die Betriebsart der TDCs ist nicht festgelegt, beispielsweise ist eine andere mögliche Betriebsart der sogenannte common stop mode, in dem das Signal der Lawinenphotodiode den jeweiligen TDC startet und alle TDCs gemeinsam beispielsweise am Ende einer Messperiode angehalten werden.

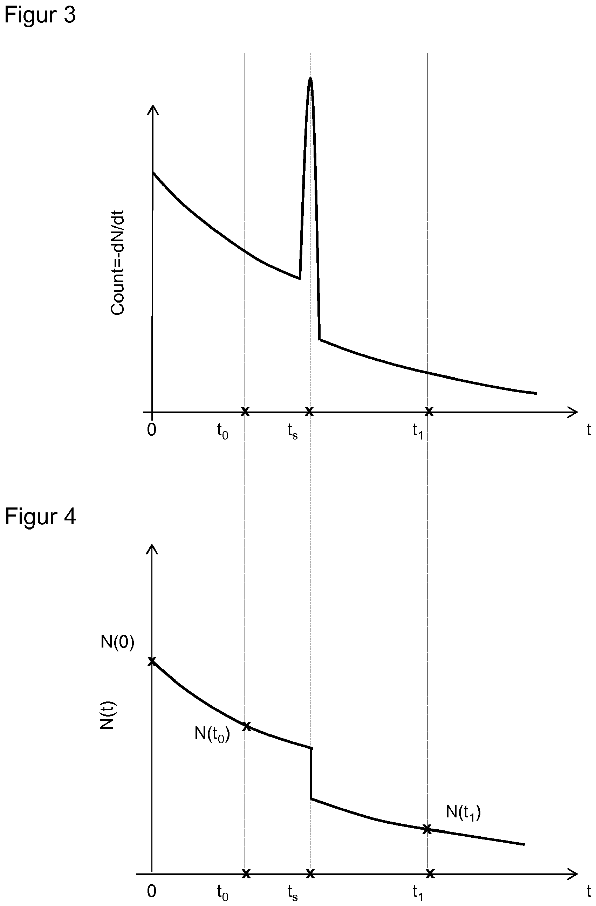

Weitere Auswertungsschritte sind in Figur 1 nur rudimentär dargestellt und werden erst weiter unten unter Bezugnahme auf die Figuren 3 und 4 genauer erläutert. Ganz grob werden zunächst Einzellichtlaufzeiten in einem Speicher 30 gesammelt. Das kann bereits zusammenfassend geschehen, beispielsweise in einem Histogramm mit einer Binbreite, die unter Berücksichtigung der gewünschten Auflösung und des Speicherbedarfs gewählt ist, oder es werden, um das Akkumulieren eines Histogramms oder zumindest eines fein aufgelösten Histogramms zu vermeiden, direkt fortlaufend gewisse statistische Größen wie der Mittelwert, der Mittelwert pro Bin oder die Anzahl von Einzellichtlaufzeiten und dergleichen gebildet. Die Auswertung kann sich auf einen Teilbereich (ROI) beschränken, der nach Vorauswertungen, sonstigem Vorwissen oder aufgrund Vermutung einer Umgebung der zu messenden Distanz entspricht. Die Einzellichtlaufzeiten und/oder die darauf gewonnenen Größen werden dann gemeinsam in einem Messwertblock 32 ausgewertet, um letztlich den Abstand zu dem Objekt zu gewinnen.

In einer bevorzugten Ausführungsform ist zumindest der Empfangspfad 16 auf einem ASIC integriert. Dabei können eigene Blöcke für den Lichtempfänger 26 einerseits und die Auswertungsschaltungen 28, 30, 32 andererseits vorgesehen sein. Vorzugsweise ist jedoch zumindest die jeweilige Einzellichtlaufzeitmesseinheit 28 direkt bei dem Lichtempfänger 26 angeordnet und bildet insbesondere mit einzelnen Lawinenphotodioden oder Gruppen davon intelligente Pixel oder eine pixelnahe Auswertung. Auch der Akkumulator 30 und der Messwertblock 32 können in diese Pixel integriert werden. Eine übergeordnete Steuerung entscheidet dann, ob und wie die Messergebnisse der Pixel ortsaufgelöst genutzt oder nochmals gemittelt werden. In einer weiteren Ausführungsform wird ein FPGA (Field Programmable Gate Array) und/oder ein Mikroprozessor eingesetzt, auf dem der Akkumulator 30 und/oder der Messwertblock 32 und gegebenenfalls auch die Einzellichtlaufzeitmesseinheit 28 implementiert ist.

Figur 1 zeigt nur die für die eigentliche Messung relevanten Bestandteile des optoelektronischen Sensors 10. Weitere in der Praxis notwendige und an sich bekannte Elemente wie eine Sende- oder Empfangsoptik wurden der besseren Übersicht halber weggelassen. Der Sensor 10 kann ein einfacher Taster sein, der auf einer Achse den Objektabstand misst und dann beispielsweise einen kontinuierlichen Zahlenwert für die Entfernung ausgibt, oder der Sensor 10 fungiert als Schalter, dessen Schaltzustand je nach An- oder Abwesenheit eines Objekts in einem vorgebbaren Entfernungsbereich wechselt. Die Achse des Tasters kann durch entsprechende Drehspiegel oder als insgesamt rotierender Messkopf in Drehbewegung versetzt werden und bildet dann einen Scanner. Eine weitere beispielhafte Ausführungsform des Sensors 10 ist eine 3D-Kamera.

Figur 2 zeigt zur Illustration ein beispielhaftes Histogramm einer Vielzahl von Einzellichtlaufzeiten. Dabei sind die Bins auf der X-Achse Zeitintervalle möglicher Lichtlaufzeiten, hier in beliebigen Einheiten und in hoher Auflösung, d.h. mit kleiner Binbreite. Die Y-Achse stellt die zugehörige Anzahl erfasster Einzellichtlaufzeiten dar. Das Histogramm ist also insgesamt eine Verteilung der gemessenen Einzellichtlaufzeiten.

Das Histogramm zeigt in diesem Fall ein eindeutiges Maximum, das mit bloßem Auge ungefähr im 270sten Bin erkannt wird und sich klar vom Hintergrund der durch Dunkelrauschen, Fremdlicht und andere Störeffekte verursachten Einzellichtlaufzeiten abhebt. Das Maximum könnte mit einer Schwellbewertung gefunden und daraus der Abstand des Objekts ermittelt werden. Allerdings erfordert das erheblichen Speicherbedarf für das hochaufgelöste Histogramm, besonders wenn man sich vorstellt, dass ein derartiges Histogramm in einem 3D-Bildsensor für jedes Pixel gespeichert werden müsste. Außerdem ist die Situation in Figur 2 insofern sehr einfach, als das Maximum sehr klar aus dem Hintergrund heraussticht. Das ist bei einer realen Messung insbesondere bei schwach remittierenden oder weit entfernten Objekten keineswegs der Fall.

Daher erfolgt erfindungsgemäß eine besondere Auswertung, welcher ein Modell der Verteilung von Einzellichtlaufzeiten von Mess- und Hintergrundereignissen zugrunde liegt, das die besonderen Eigenschaften von SPADs einbezieht. Diese Auswertung geschieht vorzugsweise auch nicht auf dem vollen, hochaufgelösten Histogramm, das in erste Linie zum besseren Verständnis gezeigt ist. Vielmehr wird das Histogramm vorzugsweise nur mit einer vergleichsweise schlechten Auflösung erfasst, oder es werden überhaupt nur bestimmte statistische Größen bestimmt und die Einzellichtlaufzeiten selbst verworfen, nachdem ihr Einfluss auf diese Größen ausgewertet wurde. So kann die Auswertung mit deutlich weniger Ressourcen wie Speicher, Rechenleistung und Bandbreite für Datenübertragung durchgeführt werden.

Diese modellbasierte Auswertung wird nun unter Bezugnahme auf die Figuren 3 und 4 erläutert. Figur 3 zeigt einen beispielhaften Verlauf der Anzahl von Mess- und Hintergrundereignissen in Abhängigkeit von der Zeit. Das entspricht prinzipiell dem in Figur 2 gezeigten Histogramm. Allerdings ist die Verteilung hier kontinuierlich und nicht diskret dargestellt. Außerdem ist es eine idealisierte Darstellung: Es gibt zwar Hintergrundereignisse, aber kein Rauschen in dem Sinne, als die Hintergrundereignisse mit konstanter Rate eintreten. Diese konstante Rate überlagert sich mit dem Effekt, dass sich eine Lawinenphotodiode nach Auslösen einer Lawine in ihrer Totzeit befindet und daher nicht erneut ausgelöst werden kann. Deshalb fällt die Anzahl Ereignisse mit der Zeit exponentiell ab. Um den Empfangszeitpunkt $t_s$ herum gibt es eine große Zahl von Messereignissen und daher einen Messpeak. Dadurch sind anschließend sprunghaft noch weniger Lawinenphotodioden verfügbar, und in der verbleibenden Messperiode setzt sich der exponentielle Abfall durch Hintergrundereignisse auf entsprechend niedrigerem Niveau fort.

Figur 4 zeigt einen zugehörigen zeitabhängigen Verlauf der Anzahl noch verfügbarer Lawinenphotodioden $N(t)$, die aufgrund des Hintergrundes exponentiell abfällt und zum Empfangszeitpunkt $t_s$ sprunghaft abnimmt. Es wird erneut wie schon mehrfach einleitend darauf hingewiesen, dass die Anzahl anfänglich verfügbarer Lawinenphotodioden $N(t)$ nicht zwingend mit der Anzahl physisch vorhandener Lawinenphotodioden übereinstimmt, da es Messwiederholungen geben kann. Man könnte also auch von einer Anzahl möglicher Ereignisse oder einem Eventpool sprechen, aber hier wird mit dem soeben erläuterten Begriffsverständnis die Bezugnahme auf noch verfügbare Lawinenphotodioden beibehalten.

Das Verhalten der Lawinenphotodioden während einer Messung soll nun mathematisch erfasst werden. Der insgesamt betrachtete und in den Figuren 3 und 4 gezeigte Zeitraum ist eine Messperiode, die zu einem Zeitpunkt $t = 0$ beginnt, zu dem die Lawinenphotodioden aktiv geschaltet werden, folglich bei Mess- oder Hintergrundereignissen eine Lawine auslösen, wozu die Einzellichtlaufzeitmesseinheit 28 entsprechende Lichtlaufzeiten bestimmen. Bei einem Hintergrundereignis ist das natürlich in Wahrheit keine Lichtlaufzeit, aber das kann die Messung jedenfalls in diesem Stadium nicht unterscheiden. Vorzugsweise ist der Sendezeitpunkt ebenfalls $t = 0$, eine Verschiebung, die später als Konstante korrigiert wird, aber ebenso denkbar.

Innerhalb der Messperiode wird ein Zeitintervall $[t_0,t_1]$ gewählt oder vorgegeben, welches den Messpeak und damit den zu bestimmenden Empfangszeitpunkt $t_s$ umfasst. Es können in einer Messperiode mehrere Messpeaks auftreten, beispielsweise bei halbtransparenten Objekten oder Kantentreffern. In dem Zeitintervall $[t_0,t_1]$ sollte jedoch nur ein Messpeak auftreten, andernfalls wird das Ergebnis ein Zwischenwert der Lage von mehreren Messpeaks. Das Zeitintervall $[t_0,t_1]$ kann durch Vorauswertung oder eine frühere Messung eingegrenzt werden. In einer idealisierten Betrachtung mit konstanter Hintergrundrate käme es für die Genauigkeit der Messung nicht auf das Zeitintervall $[t_0,t_1]$ an, das Ergebnis wäre davon unabhängig. In der Praxis bei rauschbehafteten Einzellichtlaufzeiten wird das Ergebnis jedoch bei feinerem Zeitintervall $[t_0,t_1]$ genauer.

Später wird ohne Beschränkung der Allgemeinheit für die untere Grenze $t_0 = 0$ gewählt. Durch diese Verschiebung der Zeitachse auf $t_0 = 0$ lassen sich die folgenden mathematischen Ausdrücke kompakter und übersichtlicher darstellen. Dieser Zeitnullpunkt darf nicht mit dem Beginn der Messperiode verwechselt werden, obwohl eine Identität auch nicht ausgeschlossen ist. Es wird also genaugenommen der feine Laufzeitanteil innerhalb des Zeitintervalls $[t_0,t_1]$ bestimmt, zu dem dann das ursprüngliche $t_0$ einfach wieder addiert werden kann.

In diesem Zeitintervall $[t_0,t_1]$ wird nun der Eventpool oder die Anzahl noch verfügbarer Lawinenphotodioden $N(t)$ betrachtet. Es wird angenommen, dass eine Lawinenphotodiode, in der einmal eine Lawine ausgelöst wurde, sich innerhalb der Messperiode, zumindest innerhalb des Zeitintervalls nicht mehr erholt. Andernfalls könnte eine Erholungsrate berücksichtigt werden, oder sie ist implizit bereits durch den Hintergrundparameter $\lambda$ mitbestimmt.

Um das Zeitverhalten von $N(t)$ zu beschreiben, werden zunächst zwei Parameter eingeführt. Das ist zum einen ein Hintergrundparameter $\lambda$, welcher die Abnahme von $N(t)$ durch Hintergrundereignisse erfasst. Wie in den Figuren 2 bis 4 erkennbar und sich sogleich erneut herausstellt, führen Hintergrundereignisse zu einem exponentiellen Abfall von $N(t)$, und daher kann der Hintergrundparameter $\lambda$ als Zeitkonstante verstanden werden.

Der Hintergrundparameter $\lambda$ lässt sich vorab durch eine Messung bestimmen. Dabei kann sichergestellt werden, dass nur Hintergrundereignisse und keine Messereignisse vorkommen, sei es indem gar keine Lichtsignale ausgesandt werden oder der Betrachtungszeitraum so gelegt wird, dass es darin keine Messereignisse gibt. Mit Mitteln der Ordnungsstatistik kann der Hintergrundparameter $\lambda$ auch aus einer Messung mit Messereignissen extrahiert werden.

Ein zweiter Parameter $p$ erfasst die Stärke des Signalpulses, also anschaulich wie stark in Figur 3 der Messpeak und damit in Figur 4 der sprunghafte Abfall von $N(t)$ zum Empfangszeitpunkt $t_s$ ausgeprägt ist. Der Messpeak wird als Dirac-Puls $\delta(t - t_s)$ modelliert, gewichtet mit dem Parameter $p$. Eine andere Pulsform, wie eine Gauß-Verteilung, wäre auch denkbar, erfordert aber nicht nur kompliziertere Berechnungen, sondern zudem meist die Beschreibung des Pulses mit zumindest zwei Parametern. Das wiederum lässt dann keine einfache Lösung mehr zu, in der die Parameter sequentiell und damit besonders einfach bestimmbar sind.

Mit diesen Parametern lässt sich nun eine System-Differentialgleichung für $N(t)$ formulieren:

$$\frac{dN(t)}{dt} = -\lambda N(t) - pN(t)\delta(t - t_s).$$

Der erste Term beschreibt Veränderungen durch Hintergrundereignisse, der zweite Term Veränderungen durch Messereignisse.

Die Lösung dieser Differentialgleichung beschreibt den Eventpool beziehungsweise die Anzahl $N(t)$ noch verfügbarer Lawinenphotodioden zur Zeit $t$ in Anhängigkeit von Hintergrundparameter $\lambda$ und Signalstärkeparameter $p$:

$$N(t) = N(t_0)e^{-\lambda(t-t_0)-p\Theta(t-t_s)}.$$

Bislang ist der Hintergrundparameter $\lambda$ bekannt, der Signalstärkeparameter $p$ jedoch noch nicht. Bekannt sind weiterhin die Anzahlen $N(t_0)$, $N(t_1)$ noch verfügbarer Lawinenphotodioden an den Grenzen des Zeitintervalls $[t_0, t_1]$. Sie können durch Integration bis $t_0$ beziehungsweise ab $t_1$ bestimmt werden. Praktisch werden dazu Histogramm-Counts aus einem Histogramm wie in Figur 2 aufaddiert, oder es werden Einzellichtlaufzeiten "on the fly" entsprechend ihrer Lage bezüglich des Zeitintervalls $[t_0, t_1]$ gezählt. Bis zum Zeitpunkt $t_s$ und damit mindestens bis zum Zeitpunkt $t_0$ lässt sich $N(t)$ und damit $N(t_0)$ auch in Kenntnis von Hintergrundparameter $\lambda$ und ohne Kenntnis von Signalstärkeparameter $p$ aus der oben angegebenen Lösung für $N(t)$ berechnen.

Sei weiterhin $\alpha = e^{-\lambda(t_1-t_0)}$, so gilt gemäß der Lösung für $N(t)$ an der oberen Grenze $t_1$:

$$N(t_1) = N(t_0)\alpha e^{-p} \text{ und damit } e^{-p} = \frac{N(t_1)}{\alpha N(t_0)}.$$

Der Signalstärkeparameter $p$ ist folglich allein durch die Randwerte von $N(t)$ an den Grenzen des Zeitintervalls $[t_0, t_1]$ und den Hintergrundparameter $\lambda$ festgelegt. Nach wie vor ohne Kenntnis von $t_s$ sind also bislang beide bisher benötigten Parameter $\lambda, p$ nacheinander bestimmbar.

Nun soll als letzter Schritt auch für den Empfangszeitpunkt $t_s$ auf analytischem Weg ein geschlossener Ausdruck gefunden werden. Dazu ist noch ein weiterer Parameter erforderlich, da das Modell beziehungsweise die Lösung $N(t)$ der Differentialgleichung sonst unterbestimmt bliebe. Dafür wird der Mittelwert $\mu$ der Einzellichtlaufzeiten im Zeitintervall $[t_0, t_1]$ herangezogen.

Der Mittelwert $\mu$ ist praktisch sehr einfach zu schätzen: Es wird für die Einzellichtlaufzeiten geprüft, insbesondere "on the fly", ob sie im Zeitintervall $[t_0, t_1]$ liegen. Ist das der Fall, wird die Einzellichtlaufzeit einer Summe hinzugeschlagen sowie ein Zähler heraufgezählt, wobei der Mittelwert $\mu$ dann der Quotient aus der Summe und dem Zählerstand ist.

Mathematisch hingegen gilt $\mu = \int_{t_0}^{t_1} dt \left(\frac{-dN}{dt}\right) t$. Dabei entspricht $\frac{-dN}{dt}$ der in Figur 3 dargestellten zeitlichen Veränderung in $N(t)$ oder noch anschaulicher dem in Figur 2 gezeigten Histogramm.

Andererseits ist entsprechend der oben samt Lösung aufgestellten Differentialgleichung

$$\frac{dN}{dt} = -\lambda N(t) - pN(t)\delta(t - t_s) = \left[N(t_0)e^{-\lambda(t-t_0)-p\Theta(t-t_s)}\right][-\lambda - p\delta(t - t_s)].$$

Wie schon erwähnt, kann ohne Beschränkung der Allgemeinheit $t_0 = 0$ gewählt werden. Mit $N_0 := N(t_0)$ wird dann aus der Gleichung für den Mittelwert und der soeben angegebenen Gleichung:

$$\mu = \int_0^{t_1} dt \left[-\lambda - p\delta(t - t_s)\right] N_0 e^{-\lambda t - p\Theta(t-t_s)} t.$$

Nach Auswertung der Integrale ergibt sich

$$\mu = \frac{N_0}{\lambda}\left[-1 + e^{-\lambda t_s} - e^{-\lambda t_s - p} + \lambda t_1 e^{-\lambda t_1 - p} + e^{-\lambda t_1 - p}\right].$$

Daraus folgt dann der gesuchte geschlossene Ausdruck für $t_s(\mu, \lambda, N_0, p, t_1)$:

$$t_s = \left(-\frac{1}{\lambda}\right)\left[ln\left(\frac{e^{\lambda t_1 + p}(\mu\lambda + N_0) - N_0(1+\lambda t_1)}{N_0(e^p - 1)}\right) - \lambda t_1\right].$$

Für den eigentlichen Messwert, den Abstand *d,* gilt wegen des doppelten Lichtwegs $d = \frac{ct_s}{2}$, wobei bei Messung in Luft *c* in sehr guter Näherung der Vakuumlichtgeschwindigkeit entspricht und in einem anderen Medium ein entsprechender Korrekturfaktor einzusetzen ist.

**Patentansprüche**

1. Optoelektronischer Sensor (10) zur Messung der Entfernung zu einem Objekt in einem Überwachungsbereich (12), der einen Lichtsender (20) zum Aussenden von Lichtsignalen (22) in den Überwachungsbereich (12), einen Lichtempfänger (26) mit mindestens einer in einem Geiger-Modus betriebenen Lawinenphotodiode zum Empfang der von dem Objekt reflektierten oder remittierten Lichtsignale (24), eine Einzellichtlaufzeitmesseinheit (28) zur Bestimmung einer Einzellichtlaufzeit eines Lichtsignals (22, 24) von dem Sensor (10) zu dem Objekt sowie eine Auswertungseinheit (30, 32) aufweist, die dafür ausgebildet ist, aus einer Vielzahl von Einzellichtlaufzeiten einen gemeinsamen Messwert für die Entfernung zu bestimmen,
**dadurch gekennzeichnet,**
**dass** die Auswertungseinheit (30, 32) weiterhin dafür ausgebildet ist, einen dem gemeinsamen Messwert zugrunde liegenden Empfangszeitpunkt $t_s$ in einem vorgebbaren Zeitintervall mit einer unteren Zeitgrenze $t_0$ und einer oberen Zeitgrenze $t_1$ mit Hilfe eines Hintergrundparameters $\lambda$ aus einem Modell der Anzahl $N(t)$ der zu einem jeweiligen Zeitpunkt *t* noch verfügbaren Lawinenphotodioden zu bestimmen, wobei eine Lawinenphotodiode noch verfügbar ist, solange darin noch keine Lawine ausgelöst wurde und wobei der Hintergrundparameter $\lambda$ die Abnahme von $N(t)$ durch Hintergrundereignisse erfasst.

2. Sensor (10) nach Anspruch 1,
wobei die Auswertungseinheit (30, 32) dafür ausgebildet ist, den Hintergrundparameter $\lambda$ aus einer Messung von Einzellichtlaufzeiten zu bestimmen.

3. Sensor (10) nach einem der vorhergehenden Ansprüche,
wobei die Auswertungseinheit (30, 32) dafür ausgebildet ist, den Empfangszeitpunkt mit Hilfe eines Signalstärkeparameters *p* zu bestimmen, der die Stärke des Signalpulses erfasst.

4. Sensor (10) nach einem der vorhergehenden Ansprüche,
wobei in dem Modell zum Empfangszeitpunkt $t_s$ eine Vielzahl von Lawinen gemäß einem Dirac-Puls $\delta(t - t_s)$ ausgelöst werden.

5. Sensor (10) nach Anspruch 4,
wobei in dem Modell die Anzahl $N(t)$ der zu einem jeweiligen Zeitpunkt noch verfügbaren Lawinenphotodioden nach der Gleichung $N(t) = N(t_0)e^{-\lambda(t-t_0)-p\Theta(t-t_s)}$ mit dem Hintergrundparameter $\lambda$ und einem Signalstärkeparameter *p* beschrieben ist, wobei der Signalstärkeparameter *p* die Stärke des Signalpulses erfasst und $\Theta$ die Heaviside-Funktion bezeichnet.

6. Sensor (10) nach Anspruch 3 oder 5,
wobei die Auswertungseinheit (30, 32) dafür ausgebildet ist, den Signalstärkeparameter *p* aus der Anzahl der noch verfügbaren Lawinenphotodioden an der unteren Zeitgrenze $t_0$ und der oberen Zeitgrenze $t_1$ zu bestimmen.

7. Sensor (10) nach einem der Ansprüche 3, 5 oder 6,
wobei die Auswertungseinheit (30, 32) dafür ausgebildet ist, den Signalstärkeparameter *p* nach der Gleichung
$e^{-p} = \frac{N(t_1)}{\alpha N(t_0)}$ zu bestimmen, wobei $\alpha = e^{-\lambda(t_1-t_0)}$ mit dem Hintergrundparameter $\lambda$ und der Heaviside-Funktion $\Theta$.

8. Sensor (10) nach einem der Ansprüche 3 oder 5 bis 7,
wobei die Auswertungseinheit (30, 32) dafür ausgebildet ist, nacheinander erst den Hintergrundparameter $\lambda$, dann mit Hilfe des Hintergrundparameters $\lambda$ den Signalstärkeparameter *p* und dann mit Hilfe von Hintergrundparameter

$\lambda$ und Signalstärkeparameter $p$ den Empfangszeitpunkt $t_s$ zu bestimmen.

9. Sensor (10) nach einem der Ansprüche 3 oder 5 bis 8,
wobei die Auswertungseinheit (30, 32) dafür ausgebildet ist, den Empfangszeitpunkt anhand einer analytischen Formel aus der Anzahl noch verfügbarer Lawinenphotodioden $N(t)$ zu einem Zeitpunkt $t$, insbesondere zum Zeitpunkt $t = t_0$ der unteren Zeitgrenze $t_0$ noch verfügbaren Lawinenphotodioden, dem Hintergrundparameter $\lambda$, dem Signal-stärkeparameter $p$ und einem weiteren Parameter zu berechnen.

10. Sensor (10) nach Anspruch 9,
wobei der weitere Parameter ein Mittelwert $\mu$ der Einzellichtlaufzeiten in dem vorgebbaren Zeitintervall ist.

11. Sensor (10) nach Anspruch 10,
wobei die Auswertungseinheit (30, 32) dafür ausgebildet ist, den Empfangszeitpunkt $t_s$ zu

$$t_s = \left(-\frac{1}{\lambda}\right)\left[ln\left(\frac{e^{\lambda t_1 + p}(\mu\lambda + N_0) - N_0(1 + \lambda t_1)}{N_0(e^p - 1)}\right) - \lambda t_1\right]$$ mit $N_0 = N(t_0)$ zu berechnen.

12. Sensor (10) nach einem der vorhergehenden Ansprüche,
wobei die Auswertungseinheit (30, 32) dafür ausgebildet ist, vorab das vorgebbare Zeitintervall so aufzufinden oder zu verfeinern, dass es kürzer ist als eine Messperiode.

13. Sensor (10) nach einem der vorhergehenden Ansprüche,
wobei der Lichtempfänger (26) eine Vielzahl in einem Geiger-Modus betriebener Lawinenphotodioden und mehrere den Lawinenphotodioden einzeln oder gruppenweise zugeordnete Einzellichtlaufzeitmesseinheiten (28) aufweist, die insbesondere mindestens einen TDC, Time-to-Digital Converter, aufweisen.

14. Verfahren zur Messung der Entfernung zu einem Objekt in einem Überwachungsbereich (12), bei dem ein Lichtsignal (22) in den Überwachungsbereich (12) ausgesandt, das von dem Objekt reflektierte oder remittierte Lichtsignal (24) mit mindestens einer in einem Geiger-Modus betriebenen Lawinenphotodiode eines Lichtempfängers (26) wieder empfangen wird, Einzellaufzeiten des Lichtsignals zu dem Objekt gemessen werden und aus einer Vielzahl von Einzellichtlaufzeiten ein gemeinsamer Messwert für die Entfernung bestimmt wird, **dadurch gekennzeichnet, dass** ein dem gemeinsamen Messwert zugrunde liegender Empfangszeitpunkt $t_s$ in einem vorgebbaren Zeitintervall mit einer unteren Zeitgrenze $t_0$ und einer oberen Zeitgrenze $t_1$ mit Hilfe eines Hintergrundparameters $\lambda$ aus einem Modell der Anzahl $N(t)$ der zu einem jeweiligen Zeitpunkt $t$ noch verfügbaren Lawinenphotodioden bestimmt wird, wobei eine Lawinenphotodiode noch verfügbar ist, solange darin noch keine Lawine ausgelöst wurde und wobei der Hintergrundparameter $\lambda$ die Abnahme von $N(t)$ durch Hintergrundereignisse erfasst.

**Claims**

1. An optoelectronic sensor (10) for measuring the distance of an object in a monitored zone (10), the optoelectronic sensor (10) comprising a light transmitter (20) for transmitting light signals (22) into the monitored zone (12), a light receiver (26) having at least one avalanche photodiode operated in Geiger mode for receiving the light signals (24) reflected or remitted by the object, an individual time of flight measurement unit (28) for determining an individual time of flight of a light signal (22, 24) from the sensor (10) to the object and an evaluation unit (30, 32) that is configured to determine a common measured value for the distance from a plurality of individual times of flight, **characterized in that** the evaluation unit (30, 32) is furthermore configured to determine a received point in time $t_s$ forming the basis of the common measured value in a predefinable time interval having a lower time boundary $t_0$ and an upper time boundary $t_1$ from a model of the number $N(t)$ of the avalanche photodiodes still available at a respective point in time $t$ based on a background parameter $\lambda$, with an avalanche photodiode still being available as long as no avalanche has been triggered therein, and wherein the background parameter $\lambda$ describes the decrease of $N(t)$ due to background events.

2. The sensor (10) in accordance with claim 1,
wherein the evaluation unit (30, 32) is configured to determine the background parameter $\lambda$ from a measurement of individual times of flight.

3. The sensor (10) in accordance with any of the preceding claims,

wherein the evaluation unit (30, 32) is configured to determine the received point in time with the aid of a signal strength parameter $p$ which describes the intensity of the signal pulse.

4. The sensor (10) in accordance with any of the preceding claims,
   wherein a plurality of avalanches are triggered in the model at the received point in time $t_s$ in accordance with a Dirac pulse $\delta(t - t_s)$.

5. The sensor (10) in accordance with claim 4,
   wherein, in the model, the number $N(t)$ of the avalanche photodiodes still available at a respective point in time is described in accordance with the equation $N(t) = N(t_0)e^{-\lambda(t-t_0)-p\Theta(t-t_s)}$ with the background parameter $\lambda$ and the signal strength parameter $p$, wherein the signal strength parameter $p$ describes the intensity of the signal pulse and $\Theta$ is the Heaviside function.

6. The sensor (10) in accordance with any of claims 3 to 5,
   wherein the evaluation unit (30, 32) is configured to determine the signal strength parameter $p$ from the number of still available avalanche photodiodes at the lower time boundary $t_0$ and at the upper time boundary $t_1$.

7. The sensor (10) in accordance with any of claim 3, 5 or 6,
   wherein the evaluation unit (30, 32) is configured to determine the signal strength parameter $p$ in accordance with the equation $e^{-p} = \dfrac{N(t_1)}{\alpha N(t_0)}$, where $\alpha = e^{-\lambda(t_1-t_0)}$ with the background parameter $\lambda$ and the Heaviside function $\Theta$.

8. The sensor (10) in accordance with any of claims 3 or 5 to 7,
   wherein the evaluation unit (30, 32) is configured to sequentially determine first a background parameter $\lambda$, then, with the aid of the background parameter $\lambda$, a signal strength parameter $p$, and then, with the aid of the background parameter $\lambda$ and a signal strength parameter $p$, the received point in time $t_s$.

9. The sensor (10) in accordance with any of claims 3 or 5 to 8,
   wherein the evaluation unit (30, 32) is configured to calculate the received point in time with the help of an analytical formula from the number of still available avalanche photodiodes $N(t)$ at a point in time $t$, in particular at the point in time $t = t_0$ of the lower time boundary $t_0$, a background parameter $\lambda$, a signal strength parameter $p$, and a further parameter.

10. The sensor (10) in accordance with claim 9,
    wherein the further parameter is a mean value $\mu$ of the individual times of flight in the predefinable time interval.

11. The sensor (10) in accordance with claim 10,
    wherein the evaluation unit (30, 32) is configured to calculate the received point in time $t_s$ as

$$t_s = \left(-\frac{1}{\lambda}\right)\left[ln\left(\frac{e^{\lambda t_1 + p}(\mu\lambda + N_0) - N_0(1+\lambda t_1)}{N_0(e^p - 1)}\right) - \lambda t_1\right] \text{ where } N_0 = N(t_0).$$

12. The sensor (10) in accordance with any of the preceding claims,
    wherein the evaluation unit (30, 32) is configured to localize or refine a predefinable time interval in advance that is shorter than a measurement period.

13. The sensor (10) in accordance with any of the preceding claims,
    wherein the light receiver (26) has a plurality of avalanche photodiodes operated in Geiger mode and a plurality of individual time of flight measurement units (28) that are associated with the avalanche photodiodes individually or group-wise, the individual time of flight measurement units (28) in particular comprising at least one TDC, Time-to-Digital Converter.

14. A method of measuring the distance of an object in a monitored zone (12), wherein a light signal (22) is transmitted into the monitored zone (12), the light signal (24) reflected or remitted by the object is received again by at least one avalanche photodiode of a light receiver (26) operated in Geiger mode, individual times of flight of the light signal to the object are measured, and a common measured value for the distance is determined from a plurality of individual times of flight,
**characterized in that** a received point in time $t_s$ forming the basis of the common measured value is determined in a predefinable time interval having a lower time boundary $t_0$ and an upper time boundary $t_1$ from a model of the number $N(t)$ of the avalanche photodiodes still available at a respective point in time $t$ based on a background parameter $\lambda$, with an avalanche photodiode still being available as long as no avalanche has been triggered therein, and wherein the background parameter $\lambda$ describes the decrease of $N(t)$ due to background events.

## Revendications

1.  Capteur optoélectronique (10) pour mesurer la distance d'un objet dans une zone à surveiller (12), comportant un émetteur de lumière (20) destiné à émettre des signaux lumineux (22) dans la zone à surveiller (12), un récepteur de lumière (26) présentent au moins une photodiode à avalanche qui fonctionne en mode Geiger et destiné à recevoir les signaux lumineux (24) réfléchis ou réémis par l'objet, une unité de mesure de temps de parcours de lumière individuel (28) pour déterminer un temps de parcours de lumière individuel d'un signal lumineux (22, 24) en provenance du capteur (10) vers l'objet, ainsi qu'une unité d'évaluation (30, 32) qui est réalisée pour déterminer à partir d'une multitude de temps de parcours de lumière individuels une valeur de mesure commune pour la distance,
    **caractérisé en ce que**
    l'unité d'évaluation (30, 32) est en outre réalisée pour déterminer un instant de réception $t_s$, sous-jacent à la valeur de mesure commune, dans un intervalle de temps prédéfinissable avec une limite de temps inférieure $t_0$ et une limite de temps supérieure $t_1$ à l'aide d'un paramètre d'arrière-plan $\lambda$ d'un modèle du nombre $N(t)$ de photodiodes à avalanche encore disponibles à un instant respectif $t$, une photodiode à avalanche étant encore disponible tant qu'aucune avalanche ne s'y déclenche, et le paramètre d'arrière-plan $\lambda$ saisissant la diminution de $N(t)$ par des événements d'arrière-plan.

2.  Capteur (10) selon la revendication 1, dans lequel l'unité d'évaluation (30, 32) est réalisée pour déterminer le paramètre d'arrière-plan $\lambda$ à partir d'une mesure de temps de parcours de lumière individuels.

3.  Capteur (10) selon l'une des revendications précédentes, dans lequel l'unité d'évaluation (30, 32) est réalisée pour déterminer l'instant de réception à l'aide d'un paramètre d'intensité de signal $p$ qui mesure l'intensité de l'impulsion du signal.

4.  Capteur (10) selon l'une des revendications précédentes, dans lequel dans le modèle, une multitude d'avalanches sont déclenchées selon une impulsion Dirac $\delta$ $(t-t_s)$ à l'instant de réception $t_s$.

5.  Capteur (10) selon la revendication 4, dans lequel dans le modèle, le nombre $N(t)$ de photodiodes à avalanche encore disponibles à un instant respectif est décrit selon l'équation

$$N(t) = N(t_0)e^{-\lambda(t-t_0)-p\Theta(t-t_s)}$$

avec le paramètre d'arrière-plan $\lambda$ et un paramètre d'intensité de signal $p$, le paramètre d'intensité de signal $p$ saisissant l'intensité de l'impulsion de signal et $\Theta$ désignant la fonction Heaviside.

6.  Capteur (10) selon la revendication 3 ou 5, dans lequel l'unité d'évaluation (30, 32) est réalisée pour déterminer le paramètre d'intensité de signal $p$ à partir du nombre de photodiodes à avalanche encore disponibles au niveau de la limite de temps inférieure $t_0$ et de la limite de temps supérieure $t_1$.

7.  Capteur (10) selon l'une des revendications 3, 5 ou 6, dans lequel l'unité d'évaluation (30, 32) est réalisée pour déterminer le paramètre d'intensité de signal $p$ selon l'équation $e^{-p} = \dfrac{N(t_1)}{\alpha N(t_0)}$ sachant que $\alpha = e^{-\lambda(t_1-t_0)}$, avec le paramètre d'arrière-plan $\lambda$ et la fonction Heaviside $\Theta$.

8.  Capteur (10) selon l'une des revendications 3 ou 5 à 7, dans lequel l'unité d'évaluation (30, 32) est réalisée pour déterminer successivement tout d'abord le paramètre d'arrière-plan $\lambda$, puis le paramètre d'intensité de signal $p$ en se basant sur le paramètre d'arrière-plan λ, puis l'instant de réception $t_s$ en se basant sur le paramètre d'arrière-plan λ et sur le paramètre d'intensité de signal $p$.

9. Capteur (10) selon l'une des revendications 3 ou 5 à 8, dans lequel l'unité d'évaluation (30, 32) est réalisée pour calculer l'instant de réception en se basant sur une formule analytique à partir du nombre de photodiodes à avalanche $N(t)$ encore disponibles à un instant $t$, en particulier à l'instant $t = t_0$ de la limite de temps inférieure $t_0$, à partir du paramètre d'arrière-plan λ, à partir du paramètre d'intensité de signal $p$ et d'un autre paramètre.

10. Capteur (10) selon la revendication 9, dans lequel l'autre paramètre est une valeur moyenne μ des temps de parcours de lumière individuels dans l'intervalle de temps prédéfinissable.

11. Capteur (10) selon la revendication 10, dans lequel l'unité d'évaluation (30, 32) est réalisée pour calculer l'instant de réception $t_s$ à

$$t_s = \left(-\frac{1}{\lambda}\right)\left[ln\left(\frac{e^{\lambda t_1 + p}(\mu\lambda + N_0) - N_0(1 + \lambda t_1)}{N_0(e^p - 1)}\right) - \lambda t_1\right]$$

12. Capteur (10) selon l'une des revendications précédentes, dans lequel l'unité d'évaluation (30, 32) est réalisée pour préalablement trouver ou affiner l'intervalle de temps prédéfinissable de telle sorte qu'il soit plus court qu'une période de mesure.

13. Capteur (10) selon l'une des revendications précédentes, dans lequel le récepteur de lumière (26) comprend une multitude de photodiodes à avalanche qui fonctionnent en mode Geiger et plusieurs unités de mesure de temps de parcours de lumière individuel (28) associées individuellement ou par groupe aux photodiodes à avalanche, qui présentent en particulier au moins un convertisseur TDC, dit Time-to-Digital Converter.

14. Procédé pour mesurer la distance d'un objet dans une zone à surveiller (12), dans lequel un signal lumineux (22) est émis dans la zone à surveiller (12), le signal lumineux (24) réfléchi ou réémis par l'objet est reçu par au moins une photodiode à avalanche d'un récepteur de lumière (26), laquelle fonctionne en mode Geiger, des temps de parcours individuels du signal lumineux vers l'objet sont mesurés, et à partir d'une multitude de temps de parcours de lumière individuels une valeur de mesure commune pour la distance est déterminée,
**caractérisé en ce que**
un instant de réception $t_s$, sous-jacent à la valeur de mesure commune, dans un intervalle de temps prédéfinissable avec une limite de temps inférieure $t_0$ et une limite de temps supérieure $t_1$ est déterminé à l'aide d'un paramètre d'arrière-plan λ d'un modèle du nombre $N(t)$ de photodiodes à avalanche encore disponibles à un instant respectif $t$, une photodiode à avalanche étant encore disponible tant qu'aucune avalanche ne s'y déclenche, et le paramètre d'arrière-plan λ saisissant la diminution de $N(t)$ par des événements d'arrière-plan.

Figur 1

Figur 2

Figur 3

Figur 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102007013714 A1

**In der Beschreibung aufgeführte Nicht-Patentliteratur**

- **VON MILSTEIN et al.** Acquisition algorithm for direct-detection ladars with Geiger-mode avalanche photodiodes. *Applied optics,* 2008, vol. 47 (2), 296-311

- **LUU, JANE X. ; LEAF A. JIANG.** Saturation effects in heterodyne detection with Geiger-mode InGaAs avalanche photodiode detector arrays. *Applied optics,* 2006, vol. 45 (16), 3798-3804